# EUROPEAN PATENT APPLICATION

(11) **EP 2 527 230 A1**
(43) Date of publication of application: **28.11.2012**
(21) Application number: 11734771.6
(22) Date of filing: 21.01.2011
(51) Int. Cl.: B62D 6/00, B62D 5/06, B62D 101/00, B62D 117/00, B62D 127/00

(54) **CONTROL DEVICE OF ELECTROHYDRAULIC POWER STEERING APPARATUS**

(30) Priority: 22.01.2010 JP 2010011524
(71) Applicant: Fujitsu Ten Limited, Kobe-shi, Hyogo 652-8510 (JP)
(72) Inventor: HISANAGA, Masato, Kobe-shi, Hyogo 652-8510 (JP)
(74) Representative: Ward, James Norman
(86) International application number: PCT/JP2011/051102
(87) International publication number: WO 2011/090165

(57) **Abstract**

A control device of a power steering apparatus which generates hydraulic pressure for assisting the operation of a steering wheel of a vehicle by an oil pump that is driven by an electric motor is provided with a target rotation speed setting means, a motor control means, and a processing means. The target rotation speed setting means sets the target rotation speed of the electric motor on the basis of the vehicle speed of the vehicle, which is detected by a vehicle speed sensor, and the steering angular speed of the steering wheel, which is detected by a steering angular speed sensor. The motor control means controls the electric motor so that the rotation speed of the electric motor becomes the target rotation speed. The processing means detects an end contact state in which steering force is applied although the steering wheel reaches a mechanical operation limit when the drive load of the electric motor exceeds a threshold load and the time period when the state in which the steering angular speed is lower than a threshold angular speed is established reaches a threshold time period, and performs a protection operation for preventing the target rotation speed setting means from increasing the target rotation speed.

## Description

### Technical Field

The invention relates to a control device of an electrohydraulic power steering apparatus that generates oil pressure for assisting a steering operation by an oil pump driven by an electric motor.

### Background Art

An electrohydraulic power steering apparatus has been conventionally known which rotates an oil pump by an electric pump, supplies hydraulic oil from the oil pump to a power cylinder and thus decreases an operating force of a steering wheel.

The electrohydraulic power steering apparatus is provided with a control device that controls the electric motor, based on a vehicle speed detected by a vehicle speed sensor and a steering angular velocity detected by a steering angular velocity sensor.

The control device is an electronic control unit that controls a revolution of the electric motor, based on the vehicle speed and the steering angular velocity, so as to change an assisting force at the time of steering operation, depending on the vehicle speed, and has a motor driving circuit consisting of an inverter circuit for driving the electric motor.

In many cases, the electronic control unit is mounted in an engine room in which an environment temperature is high. Also, it is necessary to supply a large current to the electric motor so as to drive the oil pump. Therefore, heat generation is increased in a device configuring the motor driving circuit, so that the device may be thermally fractured.

Particularly, at a butting state where even a gear end of a rack gear is steered by the operation of the steering wheel and a steering force is kept applied, a load of the oil pump is maximum and the maximum current continues to flow to the electric motor, so that the heat generation of the motor driving circuit is considerably increased. It can be also said that the butting state is a state where the steering force is kept applied even when the steering wheel reaches a mechanical operation limit. In order to cope with the situation, a large-sized heat sink is attached to the motor driving circuit. However, when an expensive switching device having high heat resistance is used, the cost of parts is increased and a problem is caused with respect to a mounting space for the electronic control unit. Further, a secondary problem that fuel consumption of the engine is lowered because the power of a battery should be supplemented is also caused.

Accordingly, measures have been suggested in which a temperature sensor such as thermistor is provided in the vicinity of the motor driving circuit and the electronic control unit monitors a temperature increase of a device and reduces a revolution of the electric motor or restricts the upper limit revolution when the monitored temperature exceeds a predetermined threshold temperature.

However, when the revolution of the electric motor is reduced or the upper limit revolution is restricted due to the temperature increase of the device, it is not possible to drive the electric motor with the maximum capability until the temperature of the device is dropped and the assisting force is lowered at the time of steering operation thereafter, so that the operating capability of the steering is lowered.

Also, a rack shaft cannot be further moved at the butting state. Nevertheless, the electric motor is driven to continuously apply the load. Thereby, the rack shaft or column shaft is applied with an excessive load and may be thus mechanically fractured.

An electric power steering apparatus also has the same problems. In order to solve the problems, JP-A-11-129925 (Patent Document 1) suggests an electric power steering apparatus including a steering torque detector that detects steering torque to be applied to a steering system, an electric motor that adds an assisting force to the steering system, a current controller that outputs a current command value for the electric motor, based on a steering torque detection value of the steering torque detector, a current restrictor that restricts the current command value, which is output from the current controller, at an abnormal state, a maximum steering angle/steering state detector detecting that the steering system reaches a maximum steering angle, and a current command value corrector that detects the maximum steering angle by the maximum steering angle/steering state detector and lowers a current command value calculated by the current controller when the steering torque detection value detected by the steering torque detector is a predetermined value or larger.

### Summary of Invention

### Problems to Be Solved by Invention

However, the electric power steering apparatus disclosed in Patent Document 1 is an apparatus that is necessarily controlled on the basis of an expensive steering torque detection mechanism in which a lower end portion of a steering shaft and an upper end portion of a pinion are coupled by a torsion bar and a steering torque sensor is arranged on an outer periphery thereof. However, from a standpoint of costs, it is problematic to provide the steering torque detection mechanism to the electrohydraulic power steering apparatus, which does not originally require the steering torque detection mechanism, so as to simply detect the butting state.

The invention has been made to solve the above problems. An object of the invention is to provide a control device that can appropriately detect a butting state without providing a new sensor to the conventional electrohydraulic power steering apparatus and can suppress an abnormal temperature increase of a driving circuit.

### Means for Salving Problems

In order to solve the above object, according to the invention, there is provided a control device for a power steering device configured to generate oil pressure for assisting an operation of a steering wheel of a vehicle with an oil pump driven by an electric motor, the control device comprising: a target revolution provider configured to provide a target revolution based on a speed of the vehicle detected by a vehicle speed sensor and a steering angular velocity detected by a steering angular velocity sensor; a motor controller configured to control the electric motor such that a revolution of the electric motor is made coincident with the target revolution; and a processor configured to detect a butting state in which a steering force is kept applied even when the steering wheel reaches a mechanical operation limit, when a time period in which a condition that a driving load of the electric motor exceeds a threshold load and a condition that the steering angular velocity falls below a threshold angular velocity are both satisfied reaches a threshold time period, the processor configured to perform a protective operation that causes the target revolution provider not to increase the target revolution when the butting state is detected.

### Advantageous Effects of Invention

According to the above configuration, the processor monitors the driving load of the electric motor and the steering angular velocity, detects the butting state of the steering wheel based on the driving load and the steering angular velocity, and performs the protective operation so that the target revolution of the electric motor is not increased. Therefore, it is possible to appropriately detect the butting state without a separate sensor and to suppress an abnormal temperature increase of a motor driving circuit.

### Brief Description of Drawings

FIG. 1 illustrates an electrohydraulic power steering apparatus.
FIG. 2 is a circuit diagram showing a part of a control device according to an illustrative of the invention.
FIG. 3 is a function block diagram showing a part of the control device according to an illustrative of the invention.
FIG. 4 is a flowchart showing electric motor control that is carried out by the control device according to an illustrative of the invention.
FIG. 5 is a flowchart showing butting determination processing that is executed by the control device according to an illustrative of the invention.
FIG. 6 is a flowchart showing absolute rudder angle initializing processing that is carried out by the control device according to an illustrative of the invention.
FIG. 7 is a flowchart showing absolute rudder angle estimating processing that is executed by the control device according to an illustrative of the invention.
FIG. 8 is a flowchart showing absolute rudder angle receiving processing that is performed by the control device according to an illustrative of the invention.

### Mode to Carry Out Invention

Hereinafter, a control device of an electrohydraulic power steering apparatus according to an illustrative embodiment of the invention will be specifically described with reference to the accompanying drawings.

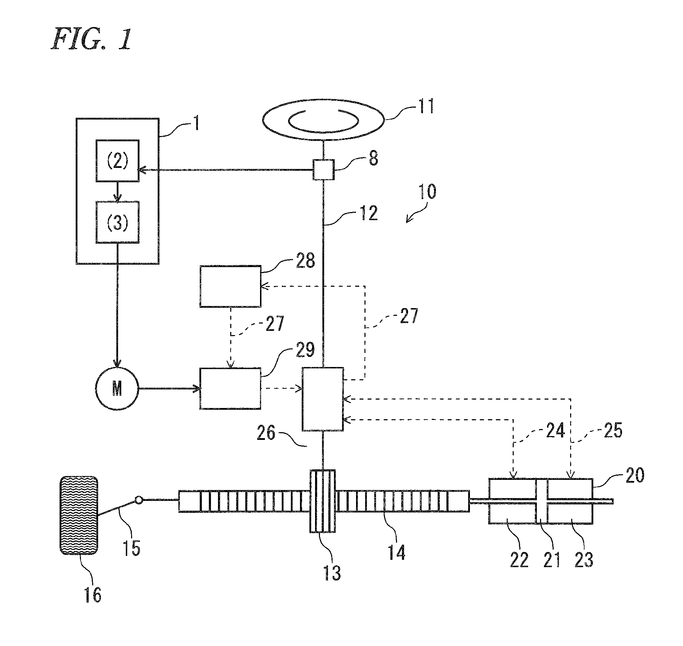

As shown in FIG. 1, an electrohydraulic power steering apparatus 10 has a steering shaft 12, a steering wheel 11 that is coupled to one end of the steering shaft 12, a pinion gear 13 that is attached to the other end of the steering shaft 12 and a rack shaft 14 having a rack gear formed thereon that is engaged with the pinion gear 13. The rack shaft 14 extends in a vehicle width direction and both end portions thereof are coupled to a wheel-to-be-steered 16 via a tie-rod 15 (a right end portion is not shown).

When the steering wheel 11 is operated and a rotating force thereof is thus transmitted to the steering shaft 12, the pinion gear 13 at a leading end portion of the steering shaft is rotated and the rack shaft 14 is thus moved in the vehicle width direction. As a result, the moving of the rack shaft 14 is transmitted to the tie-rod 15 and directions of left and right wheels-to-be-steered 16 are changed.

Further, the electrohydraulic power steering apparatus 10 has a power cylinder 20 including a piston 21 coupled to the rack shaft 14 and a pair of cylinder chambers 22, 23 formed by the piston 21. An oil pressure control valve 26 is connected to the respective cylinder chambers 22, 23 through oil supply paths 24, 25.

The oil pressure control valve 26 is provided on an oil circulation path 27. Hydraulic oil reserved in a reservoir tank 28 is pumped by an oil pump 29. The pumped hydraulic oil is discharged from the oil pump 29, supplied to the oil pressure control valve 26 and again returned to the reservoir tank 28. As a driving source of the oil pump 29, a synchronous electric motor M is provided. When the oil pump 29 is driven, the hydraulic oil is circulated through the oil circulation path 27. When the oil pump 29 is deactivated, the circulation of the hydraulic oil is stopped.

A degree of opening of the oil pressure control valve 26 is changed and a supply state of the hydraulic oil to the power cylinder 20 is changed, depending on a direction and a magnitude of torque applied to the steering shaft 12. When the hydraulic oil is supplied to any one of the cylinder chambers 22, 23 of the power cylinder 20, the piston 21 is moved in any one direction along the vehicle width, thereby urging the rack shaft 14 to move. Thereby, an assisting force is applied in the operating direction of the steering wheel 11.

The steering shaft 12 is provided with a rotary encoder that is an steering angular velocity sensor 8 for detecting an operating speed and an operating direction of the steering wheel 11. Based on frequencies and a phase difference of signals of two phases of A and B phases output from the rotary encoder, it is possible to determine the operating speed and operating direction of the steering wheel 11.

The electrohydraulic power steering apparatus 10 has an electrohydraulic power steering control device 1 (hereinafter, referred to as 'electronic control unit 1') incorporated therein that controls the driving of the electric motor M so as to generate oil pressure for assisting a steering operation by the oil pump 29.

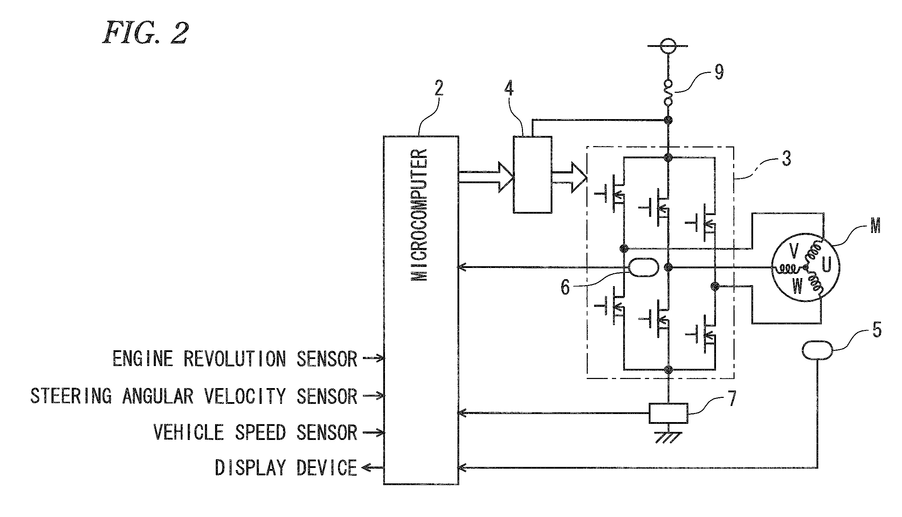

As shown in FIG. 2, the electronic control unit 1 has a microcomputer 2 having a CPU, a ROM and a RAM and peripheral circuits for input and output. The peripheral circuits include a motor driving circuit 3 that has a three-phase inverter circuit driving the electric motor M, a pre-driver 4 that is provided between the microcomputer 2 and the motor driving circuit 3, an input circuit having a buffer for inputting a signal for control, and the like.

The microcomputer 2 is input with a pulse signal output from a rotational position sensor 5 that has a Hall device detecting a rotor position of the electric motor M, a temperature signal output from a temperature sensor 6 such as thermistor detecting a temperature of the motor driving circuit 3, a current signal output from a current sensor 7 that detects a current flowing in the electric motor M, a steering angular velocity signal output from the steering angular velocity sensor 8, a vehicle speed signal output from a vehicle speed sensor, a signal output from an engine revolution sensor, and the like, and outputs a control signal for the pre-driver 4, a control signal for a display device, and the like. In the meantime, a power feed line from a battery to the motor driving circuit 3 is provided with a fuse 9.

The current sensor 7 has a resistance that is connected between the motor driving circuit 3 and a ground and an amplifier circuit that amplifies a voltage between both ends of the resistance, and is configured to input a current value flowing in the electric motor M through the motor driving circuit 3 into the electronic control unit 1.

The electrohydraulic power steering apparatus 1 has a characteristic that when steering the steering wheel 11, pressure oil to be supplied to the cylinder chamber is varied by an axle reactive force caused due to a frictional force generated between a road surface and the wheel-to-be-steered 16 and by a resistance of an oil path caused due to a change in the degree of opening of the oil pressure control valve 26, so that the assisting force is varied. In order to suppress the variation, the electronic control unit 1 performs feedback control so that a revolution of the electric motor M is made consistent with a target revolution.

Based on an engine revolution, a vehicle speed, a steering angular velocity, a rotational position of the electric motor M, a temperature of the motor driving circuit 3 and a current flowing in the electric motor M, which are input through the input circuits, the electronic control unit 1 outputs a control signal, which has been subject to pulse width modulation with a predetermined duty ratio, to the pre-driver 4 so that a revolution of the electric motor M is made consistent with a predetermined target revolution. Based on the control signal, the pre-driver 4 drives a switching device configuring the motor driving circuit (inverter circuit) 3, thereby supplying current to respective phases U, V and W of the electric motor M. As a result, the oil pump 26 is driven, so that the hydraulic oil is circulated and supplied to the oil circulation path 27.

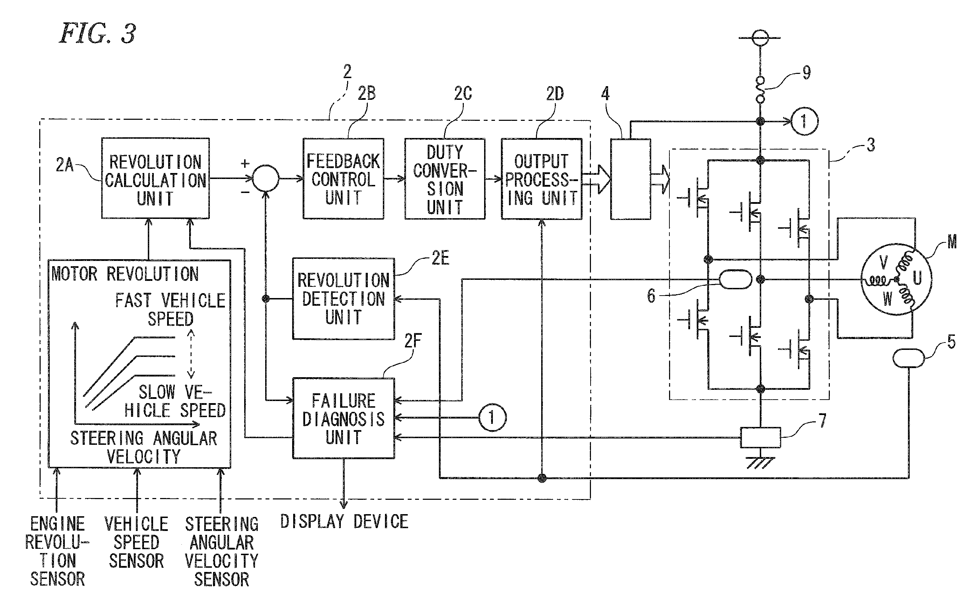

FIG. 3 shows a plurality of function blocks that is realized by the microcomputer 2 of the electronic control unit 1. The function blocks are implemented by a control program stored in the ROM and the CPU executing the control program.

Also, the ROM stores therein control map information (which is exemplified in the left and lower part of FIG. 2) indicating a relation among a vehicle speed, a steering angular velocity and a target revolution of the electric motor with regard to the vehicle speed.

In the below, the respective function blocks are described. A revolution calculation unit 2A sets a target revolution of the electric motor, based on a vehicle speed, a steering angular velocity and the control map information stored in the ROM. A revolution detection unit 2E calculates a current revolution of the rotor, based on a position signal from the rotational position sensor 5. A feedback control unit 2B performs a PID calculation to calculate an operating amount for the electric motor M so that a deviation between the target revolution and the current revolution is small.

A duty conversion unit 2C generates a PWM modulated pulse signal, based on the calculated operating amount. An output processing unit 2D outputs applying timing of current to be supplied to the respective phases U, V and W of the electric motor M, i.e., a signal for controlling on or off timing of the switching device of the motor driving circuit (inverter circuit) 3, based on the duty ratio of the pulse signal and the rotational position of the rotor detected by the rotational position sensor 5.

A failure diagnosis unit 2F monitors the revolution calculated by the revolution detection unit 2E, the surrounding temperature of the motor driving circuit 3, the current flowing in the electric motor M and the voltage applied to the electric motor M and also monitors the rotating state of the electric motor M and the temperature state of the motor driving circuit 3. When the temperature of the motor driving circuit 3 exceeds a threshold temperature pre-stored in the ROM, the failure diagnosis unit outputs an abnormal high temperature signal to the revolution calculation unit 2A. When an abnormality that the revolution of the electric motor M is largely deviated from the target revolution is detected, the failure diagnosis unit outputs a control signal for enabling the display device to notify the abnormal state.

The revolution calculation unit 2A to which the abnormal high temperature signal is input from the failure diagnosis unit 2F sets, as the target revolution, a revolution for fail safe smaller than the target revolution of the electric motor M set based on the vehicle speed, the steering angular velocity and the control map information.

That is, the revolution calculation unit 2A serves as a target revolution provider configured to set the target revolution of the electric motor based on the vehicle speed detected by the vehicle speed sensor and the steering angular velocity detected by the steering angular velocity sensor and to keep or decrease the target revolution when the temperature of the motor driving circuit detected by the temperature sensor exceeds the threshold temperature.

Also, the feedback control unit 2B, the duty conversion unit 2C, the output processing unit 2D and the revolution detection unit 2E serve as a motor controller configured to feedback control the electric motor M so that the revolution of the electric motor is made consistent with the target revolution.

When an ignition switch turns on and an engine is thus activated, the electronic control unit 1 starts the driving control of the electric motor M so as to start assist control for a steering operation by a user in a case where an engine revolution becomes larger than a predetermined idling revolution (for example, 600 rpm), based on the input from the engine revolution sensor. That is, the motor controller feedback controls the electric motor M so that a revolution of the electric motor is made consistent with the target revolution provided by the target revolution provider. Then, when the engine revolution is decreased below the idling revolution, the motor controller stops the electric motor M.

In a butting state where even the gear end of the rack shaft 14 is steered by the operation of the steering wheel 11 by the user and the steering force is kept applied, the load of the oil pump 29 becomes maximum and the maximum current continues to flow in the electric motor M. Hence, the heat generation of the motor driving circuit 3 is remarkably increased.

In order to cope with the above situation, the failure diagnosis unit 2F is configured to serve as a processor that performs butting protection processing (a protective operation in the invention) of keeping or decreasing the target revolution (i.e., causing the target revolution not to increase) before the temperature of the motor driving circuit exceeds the threshold temperature, when a time period in which a condition that the driving current value of the electric motor M detected by the current sensor 7 exceeds a predetermined threshold current and a condition that the steering angular velocity falls below a predetermined threshold angular velocity are both satisfied continues during a determination reference time period (a threshold time period in the invention) set as a first reference time period. That is, the failure diagnosis unit acquires the driving current value of the electric motor M as a driving load of the electric motor M.

The processor is further configured to calculate an absolute steering amount based on the steering angular velocity and to set, as the determination reference time period, a second reference time period shorter than the first reference time period when the butting state is estimated based on the calculated absolute steering amount, thereby determining the butting state more rapidly.

Also, when an absolute rudder angle is input from another electronic control unit that controls a vehicle based on an absolute rudder angle detected by a rudder angle sensor, the processor is configured to set, as the determination reference time period, the second reference time period shorter than the first reference time period in a case where the butting state is estimated based on the absolute rudder angle.

For example, when an electronic control unit for side slipping prevention of a vehicle is mounted, it is necessary to control a posture of the vehicle based on the absolute rudder angle. Therefore, a sensor such as resolver and the like is provided to the steering shaft and the like, thereby detecting the absolute rudder angle. In this case, the absolute rudder angle that is transmitted from the electronic control unit for side slipping prevention of a vehicle through a vehicle network such as CAN and the like is received, so that it is possible to perform the butting protection more rapidly.

In the meantime, the first reference time period and the second reference time period set as the determination reference time period are values that are appropriately set. For example, the first reference time period may be set to be several seconds (specifically, 3 seconds) and the second reference time period may be set to be several hundreds of msec (specifically, 500 msec). Also, the second reference time period may be zero.

When the steering angular velocity reaches the threshold angular velocity while the electric motor M is controlled with the target revolution being kept or decreased after the butting state is determined, the processor is configured to release the determination of the butting state and to return the target revolution to a normal value provided by the target revolution provider, i.e., to terminate the butting protection processing. Thereby, when the butting state is canceled, the assisting force is rapidly returned.

Further, the processor is configured to execute the butting determination processing only when the velocity speed is lower than a predetermined velocity speed threshold. When the vehicle speed reaches the vehicle speed threshold with the target revolution being kept or decreased after the butting state is determined, the processor is configured to release the determination of the butting state and to return the target revolution to the normal value provided by the target revolution provider. The butting state may occur in a high probability when the vehicle speed is relatively slow such as when putting the vehicle into a garage and rarely occurs at the time of normal traveling. Hence, the butting determination is made only when the vehicle speed is smaller than the predetermined vehicle threshold, so that it is possible to enhance the determination precision of the butting state.

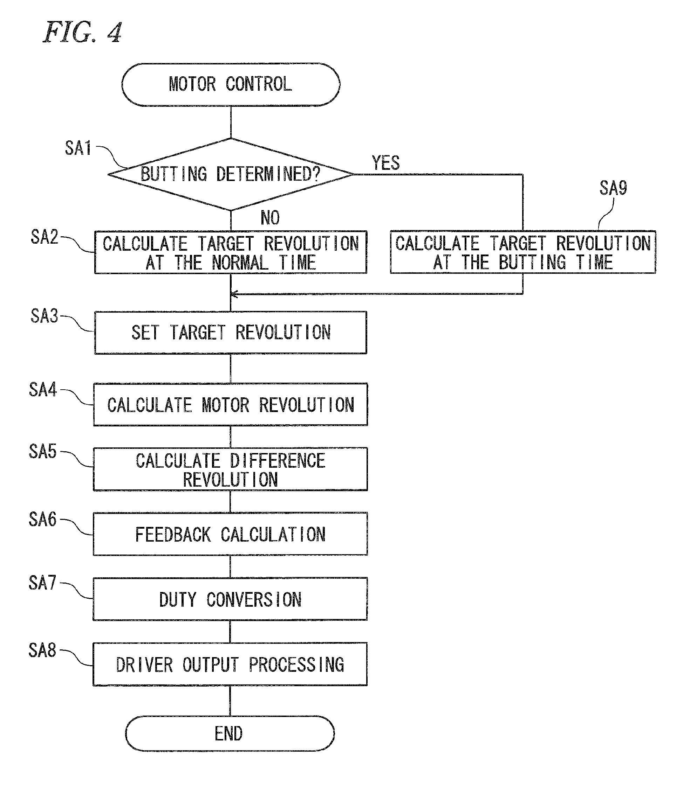

In the below, the butting protection processing that is executed by the electronic control unit 1 is described based on flowcharts of FIGS. 4 to 8.

FIG. 4 shows a main flow of the electric motor control that is executed by the electronic control unit 1. The flow is iteratively executed with a predetermined interval, for example 1 msec.

First, the failure diagnosis unit 2F executes the butting determination processing of determining whether the butting state is made in which even the gear end of the rack shaft 14 is steered by the operation of the steering wheel 11 by the user and the steering force is kept applied (SA1). When it is determined that the butting state is not made (No in SA1), the revolution calculation unit 2A calculates a target revolution at the normal time based on the vehicle speed, the steering angular velocity and the control map information (SA2). When it is determined that the butting state is made (Yes in SA1), the revolution calculation unit calculates a target revolution at the butting time (SA9). The revolution calculated in step SA2 or SA9 is stored in the RAM, as a target revolution (SA3). The target revolution at the butting time is set to be the smallest revolution necessary to drive the oil pump 29, for example about 1,000 rpm.

The revolution detection unit 2E calculates a current revolution of the electric motor M (SA4) and the feedback control unit 2B calculates a difference between the target revolution stored in the RAM and the current revolution (SA5) and calculates a feedback operation amount for controlling the electric motor M with the target revolution, based on the difference, by the PID calculation, for example (SA6).

Then, the duty conversion unit 2C generates a PWM signal having an adjusted duty ratio based on the feedback operation amount (SA7) and the output processing unit 2D outputs driving signals corresponding to the respective phases of the electric motor M from the PWM signal to the pre-driver 4 at predetermined timing based on the rotational position of the rotor.

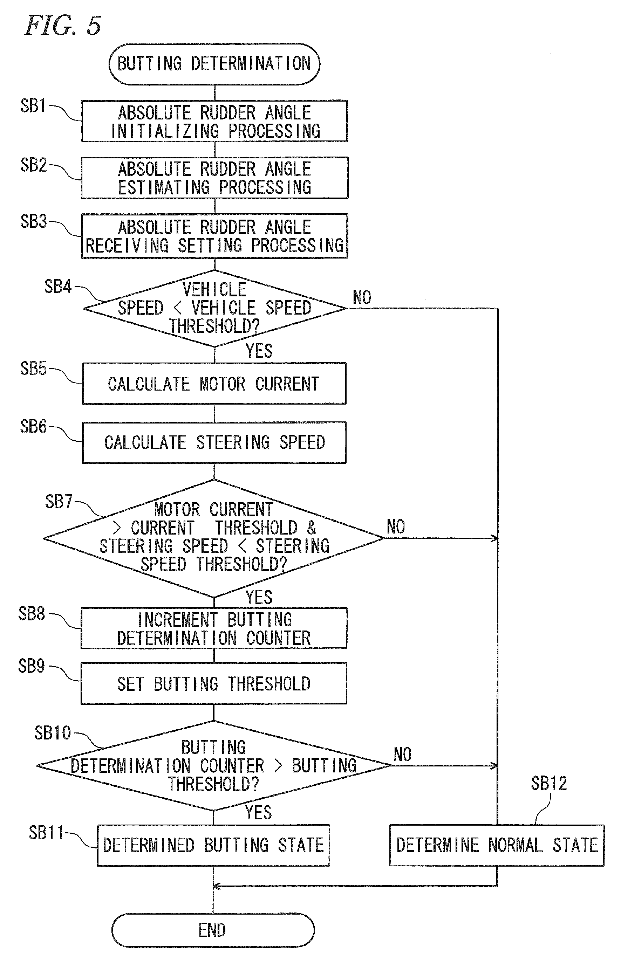

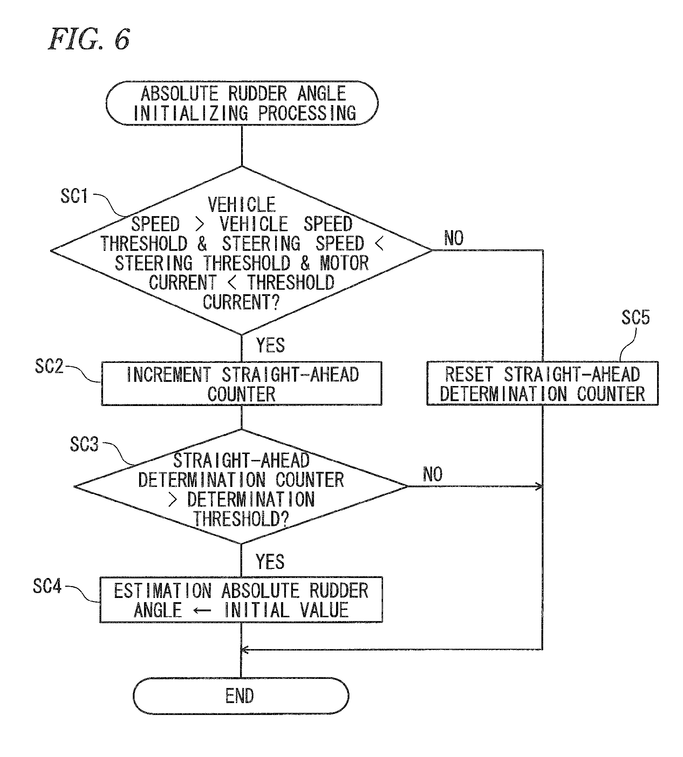

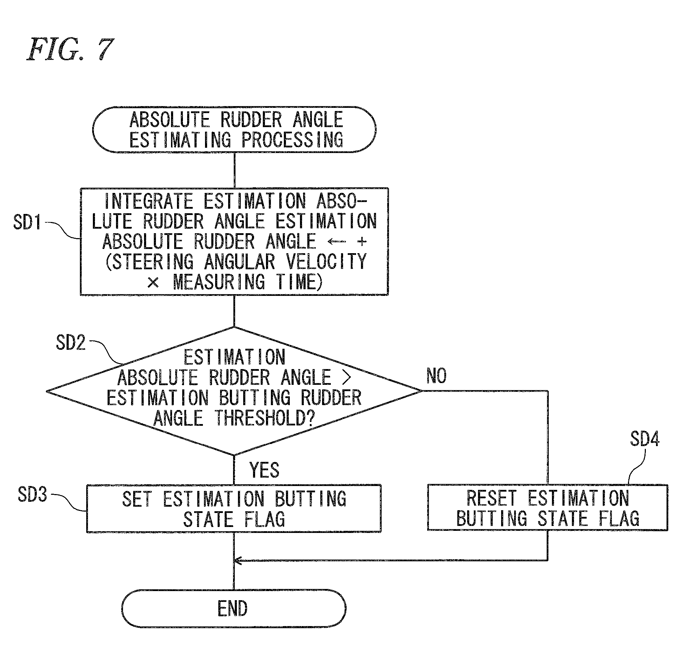

FIG. 5 shows the butting determination of the step SA1 in FIG. 4 in details. It is possible to determine the operating speed and operation direction of the steering wheel 11 by the pulse signals of two phases output from the steering angular velocity sensor 8, thereby figuring out a steering state. However, it is not possible to figure out the correct absolute rudder angle. Hence, in order to enhance the precision at the time of butting determination, absolute rudder angle estimating processing of two systems is executed. As an absolute rudder angle estimating processing of a first system, absolute rudder angle initializing processing is executed in a step SB1 and absolute rudder angle estimating processing is executed in a step SB2. The processing will be specifically described with reference to FIGS. 6 and 7.

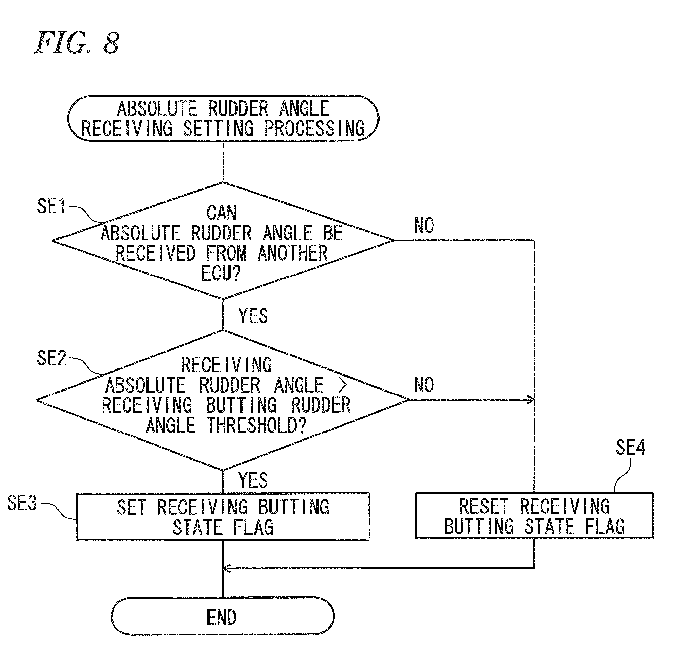

As an absolute rudder angle estimating processing of a second system, receiving setting processing of an absolute rudder angle detected by another electronic control unit is executed in a step SB3. The processing will be specifically described with reference to FIG. 8.

The processing of a step SB4 or thereafter is butting determination processing including even a case where an absolute rudder angle cannot be estimated in the steps SB1 to SB3. First, it is determined whether a vehicle speed is lower than a predetermined vehicle speed threshold. When the vehicle speed is higher than the vehicle speed threshold, it is determined that the vehicle is not at the butting state (No in SB4) and that the vehicle is at the normal state or returned to the normal state from the butting state (SB12). The butting state occurs when putting a vehicle into a garage, during which the large steering operation is typically made. Hence, the vehicle speed threshold is set to be a value sufficient to detect the low-speed state at that time, for example about 4 km/h.

When the vehicle speed is lower than the vehicle speed threshold, it is determined that the vehicle may be at the butting state (Yes in SB4) and the current being supplied to the electric motor M is calculated (SB5). Here, an average value of instantaneous values of the currents of the respective phases input from the current sensor 7 in the most recent predetermined time period (specifically, several dozens of msec to several hundreds of msec) is calculated.

Also, based on the pulse signals of the two phases input from the steering angular velocity sensor 8, a steering direction and a steering speed are calculated (SB6). The steering direction is determined based on a phase difference of the two phases and the steering speed is calculated by the frequencies of the pulse signals.

In a step SB7, it is determined whether the calculated motor current is larger than a predetermined threshold current and the calculated steering angular velocity is lower than a predetermined threshold steering angular velocity. As the threshold current, a 80% current value of the maximum current value is set, for example. As the threshold steering angular velocity, a several % steering angular velocity of the maximum steering angular velocity is set, for example.

When the above conditions are both satisfied (Yes in SB7), a butting determination counter in which an initial value is reset to zero (0) is incremented (SB8). Then, a butting threshold is set (SB9) and it is determined whether a value of the butting determination counter is larger than a predetermined butting threshold (SB 10). When the above conditions are not satisfied (No in SB7), it is determined that the vehicle is at the normal state or returned to the normal state from the butting state (SB 12).

When it is determined that the value of the butting determination counter is larger than the predetermined butting threshold (Yes in SB 10), it is determined that the vehicle is at the butting state (SB11). When it is determined that the value of the butting determination counter is the predetermined butting threshold or smaller (No in SB 10), it is determined that the vehicle is at the normal state and the value of the butting determination counter is reset (SB12).

The butting determination counter is incremented every execution period of the main flow. Thus, when the main flow is iterated every 1 msec, a duration time period in which the motor current is larger than the predetermined threshold current and the steering angular velocity falls below the predetermined threshold steering angular velocity is measured every the value of the butting determination counter × 1 msec. In a step SB 10, it is determined whether the duration time period is longer than a reference time period.

Regarding the butting threshold set in the step SB 10, when the absolute rudder angle estimated in the step SB2 becomes a rudder angle corresponding to the butting state (when an estimation butting state flag that will be described below is set) and when the absolute rudder angle, which is obtained by receiving the absolute rudder angle transmitted from another electronic control unit in the step SB3, becomes a rudder angle corresponding to the butting state (when a receiving butting state flag that will be described below is set), a value corresponding to the second reference time period is set as the determination reference time period. For the other cases, a value corresponding to the first reference time period longer than the second reference time period is set as the determination reference time period. The 'corresponding value' is a value that is obtained by dividing each determination reference time period by the execution period of the main flow.

In the meantime, although it is not described in the main flow, when the failure diagnosis unit 2F determines that the temperature of the motor driving circuit 3 detected by the temperature sensor 8 exceeds the predetermined threshold temperature, during the butting determination, the target revolution set by the revolution calculation unit 2A is restricted to the upper limit revolution that is set to be lower than the target revolution calculated based on the control map and the like. However, the target revolution may be kept.

The processor is configured to keep or decrease the target revolution when the time period in which a condition that the driving current value of the electric motor detected by the current sensor exceeds the predetermined threshold current and a condition that the steering angular velocity falls below the predetermined threshold angular velocity are both satisfied continues during the determination reference time period set as the first reference time period, and is configured to set, as the determination reference time period, the second reference time period shorter than the first reference time period when the butting state is estimated based on the absolute steering amount.

The absolute rudder angle initializing processing of the step SB1 is described. As shown in FIG. 6, when the vehicle speed is larger than the vehicle speed threshold, the steering angular velocity is smaller than the threshold steering angular velocity and the motor current is smaller than the threshold current, it is determined that there is a high probability that the vehicle is traveling straight (Yes in SC1) and a straight-ahead determination counter is incremented (SC2). When any one condition is not satisfied (No in SC1), a value of the straight-ahead determination counter is reset (SC5).

In a step SC3, a value of the straight-ahead determination counter and a predetermined straight-ahead determination threshold are compared. When it is determined that the value of the straight-ahead determination counter is larger than the predetermined straight-ahead determination threshold, it is determined that the vehicle is traveling straight and an estimation absolute rudder angle to be stored in the RAM is set to be zero that is the initial value (SC4).

That is, when a time period in which the vehicle speed is larger than the vehicle speed threshold, the steering angular velocity is smaller than the threshold steering angular velocity and the motor current is smaller than the threshold current continues during a predetermined time period corresponding to a straight-ahead determination threshold, it is determined that the vehicle is traveling straight and the estimation absolute rudder angle is thus set to be the initial value.

The absolute rudder angle estimating processing of the step SB2 is described. As shown in FIG. 7, estimation absolute rudder angle integrating processing of adding a product of the steering angular velocity detected by the steering angular velocity sensor 8 and a predetermined measuring time period to the estimation absolute rudder angle obtained after the initialization in the step SC4 is executed (SD1), and the steering angle by the steering operation from the straight-ahead state is accumulated.

For example, when the steering operation is made rightward, the product of the steering angular velocity and the predetermined measuring time period is calculated as a positive value. When the steering operation is made leftward, the product of the steering angular velocity and the predetermined measuring time period is calculated as a negative value. The value is accumulatively added to the estimation absolute rudder angle, so that an absolute rudder angle is estimated.

In a step SD2, it is determined whether an absolute value of the accumulatively added estimation absolute rudder angle is larger than an estimation butting rudder angle threshold. When the absolute value of the estimation absolute rudder angle is larger than the estimation butting rudder angle threshold (a threshold angle in the invention) (Yes in SD2), an estimation butting state flag is set (SD3). When the absolute value of the estimation absolute rudder angle is the estimation butting rudder angle threshold or smaller (No in SD2), the estimation butting state flag is reset (SD4).

The receiving setting processing of the absolute rudder angle in the step SB3 is described. As shown in FIG. 8, when an absolute rudder angle, which is transmitted from another electronic control unit, for example an electronic control unit for side slipping prevention through a vehicle communication network such as CAN, is received (SE1), it is determined whether an absolute value of the received absolute rudder angle (absolute receiving rudder angle) is larger than a receiving butting rudder angle threshold (a threshold angle in the invention). When the absolute value of the absolute receiving rudder angle is larger than the receiving butting rudder angle threshold (Yes in SE2), a receiving butting state flag is set (SE3). When the absolute value of the absolute receiving rudder angle is the receiving butting rudder angle threshold or smaller (No in SE2), the receiving butting state flag is reset (SE4).

In the meantime, the estimation butting rudder angle threshold and the receiving butting rudder angle threshold are set to be a 95% value of the absolute rudder angle at which the butting state is made. However, the invention is not limited to the value.

In the above illustrative embodiment, the driving load of the electric motor is acquired by the driving current value of the electric motor. However, a physical value other than the driving current value may be used insomuch as it cap acquire the driving load of the electric motor. For example, the driving load may be acquired by driving torque of the electric motor or by power consumption of the electric motor, instead of the driving current value.

Also, the driving load of the electric motor may be acquired by the duty ratio of the PWM signal for controlling the electric motor. In this case, at the time of butting determination, it may be determined whether a duty ratio of the PWM signal exceeds a predetermined duty threshold.

Also in this case, it is needless to say that the control as described with reference to FIGS. 4 to 6 is executed, and the processing about the driving current value may be replaced with processing about the duty ratio of the PWM signal. The threshold duty ratio may be appropriately set and may be set to be a value between 95% and 100%, for example.

In the above illustrative embodiment, in the receiving setting processing of the absolute rudder angle, the absolute rudder angle detected by the resolver is received from the electronic control unit for side slipping prevention, so that the absolute rudder angle is estimated. However, the invention is not limited to the absolute rudder angle detected by the resolver when estimating the absolute rudder angle in the receiving setting processing of the absolute rudder angle, and the absolute rudder angle may be estimated by receiving the other physical values. For example, a value of an acceleration sensor in a horizontal direction, a value of a yaw rate sensor and the like may be used.

In the above illustrative embodiment, the target revolution of the electric motor at the time of butting is set to be the smallest revolution necessary to drive the oil pump 29, for example about 1,000 rpm. However, the target revolution of the electric motor at the time of butting may be set to be variable, based on the temperature detected by the temperature sensor.

For example, the higher the temperature detected by the temperature sensor, the target revolution at the time of butting is set to be lower continuously or stepwise, thereby effectively suppressing an increase in the temperature at the time of butting.

In the above illustrative embodiment, regarding the reference time period for determining the butting state, the first reference time period and the second reference time period are set as the fixed time period. However, the reference time period may be set to be variable depending on the temperature detected by the temperature sensor.

For example, the higher the temperature detected by the temperature sensor, the first reference time period or second reference time period is set to be variable so that it is continuously or stepwise shorter. By doing so, it is possible to effectively suppress the temperature increase at the time of butting. In this case, it is possible to execute the butting control more securely before the temperature of the motor driving circuit exceeds the threshold temperature. This is because the closer the temperature detected by the temperature sensor to the threshold temperature, it is possible to determine that the butting state is made.

In the above illustrative embodiment, the control program is configured so that the processor is implemented as one function of the failure diagnosis unit 2F. However, the processor may be configured as a function block different from the failure diagnosis unit 2F.

In the meantime, the respective illustrative embodiments are just exemplary and can be appropriately changed depending on an electrohydraulic power steering apparatus to which the specific configurations of the respective blocks, the respective control variable thresholds such as load threshold, threshold angular velocity and the like are applied, within the scope of bringing about the operational effects of the invention.

This application is based on Japanese Patent Application No. 2010-011524 filed on January 22, 2010, the disclosures of which are incorporated herein by reference.

## Claims

1. A control device for a power steering device configured to generate oil pressure for assisting an operation of a steering wheel of a vehicle with an oil pump driven by an electric motor, the control device comprising:
a target revolution provider configured to provide a target revolution based on a speed of the vehicle detected by a vehicle speed sensor and a steering angular velocity detected by a steering angular velocity sensor;
a motor controller configured to control the electric motor such that a revolution of the electric motor is made coincident with the target revolution; and
a processor configured to detect a butting state in which a steering force is kept applied even when the steering wheel reaches a mechanical operation limit, when a time period in which a condition that a driving load of the electric motor exceeds a threshold load and a condition that the steering angular velocity falls below a threshold angular velocity are both satisfied reaches a threshold time period, the processor configured to perform a protective operation that causes the target revolution provider not to increase the target revolution when the butting state is detected.

2. The control device according to claim 1, wherein the processor is configured to cause the target revolution provider to decrease the target revolution when the butting state is detected.

3. The control device according to claim 1 or 2, wherein the processor is configured to cause the target revolution provider to decrease the target revolution when a temperature of a circuit for driving the electric motor detected by a temperature sensor exceeds a prescribed threshold temperature.

4. The control device according to any one of claims 1 to 3,
wherein the processor is configured to calculate an absolute steering angle of the steering wheel based on the steering angular velocity, and to detect the butting state when the absolute steering angle exceeds a threshold angle, and
wherein the processor is configured to decrease the threshold time period when the butting state is detected with the absolute steering angle.

5. The control device according to any one of claims 1 to 4,
wherein the processor is configured to detect the butting state when an absolute rudder angle inputted from an electronic control unit which controls the vehicle based on an absolute rudder angle detected by a rudder angle sensor exceeds a threshold angle, and
wherein the processor is configured to decrease the threshold time period when the butting state is detected with the absolute rudder angle.

6. The control device according to any one of claims 1 to 5, wherein the target revolution provider is configured to cause the processor to terminate the protective operation when the steering angular velocity reaches the threshold angular velocity during the protective operation.

7. The control device according to any one of claims 1 to 6,
wherein the processor is configured to detect the butting state only when the speed falls below a threshold speed, and
wherein the target revolution provider is configured to cause the processor to terminate the protective operation when the speed reaches the threshold speed during the protective operation.

8. The control device according to any one of claims 1 to 7,
wherein the motor controller is configured to perform feedback control of the electric motor, and
wherein the driving load is associated with a driving current of the electric motor.

9. The control device according to any one of claims 1 to 7,
wherein the motor controller is configured to perform PWM control of the electric motor, and
wherein the driving load is associated with a duty of the PWM control.
